# EUROPEAN PATENT APPLICATION

(11) **EP 2 650 812 A2**
(43) Date of publication of application: **16.10.2013**
(21) Application number: 13159772.6
(22) Date of filing: 18.03.2013
(51) Int. Cl.: G06F 21/10, G06Q 30/06

(54) **Administering pay per use software licensing**

(30) Priority: 20.03.2012 IN MU07642012
(71) Applicant: Tata Consultancy Services Limited, 400021 Mumbay (IN)
(72) Inventor: Singh, Meena, 560 066 Bangalore (IN); Patwardhan, Nikhil, 411 013 Pune (IN); Roy, Ashim, 411 013 Pune (IN)
(74) Representative: Hägglöf, Henrik

(57) **Abstract**

A method and a system (102) for administering pay-per-use (PPU) licensing of software applications are disclosed. The system (102) comprises a processor (202-1) and a memory (206-1). The memory (206-1) comprises an administrative module (212) configured to generate a license file based upon a request sent by a user. The license file is used by the user for accessing a software application. The administrative module (212) is further configured to receive a log file from the user. The log file comprises a track of at least one of a number of usages of the software application and a time period of the software application. The memory further includes an assessment module (214) configured to determine a validity of the license file based upon the log file.

## Description

### TECHNICAL FIELD

The present subject matter described herein, in general, relates to licensing of software applications, and more particularly to pay-per-use for licensing software applications.

### BACKGROUND

Traditional models for acquisition, use, and rental of software require a customer to pay for an expected number, or instances, of a software product that is intended to operate on the customer's computer network or system. For example, a customer desiring to provide a word processing software product for use by the customer's employees will generally pay for one copy of the software product for each of the customer's employees that will use the software product. Such payment may give the customer a license to use the software product at each of the employee work stations. The license typically prohibits copying and further distribution of the software product to other employees of the customer. The customer, moreover, pays a full price for each license thus obtained.

However, some or all of the customer's employees may use the software product only on a part-time basis. Thus, the customer in effect pays for excess capacity to ensure that all employees, including the ones that use the software product sparingly, have access to the software product. As an alternative, the customer could acquire a limited number of software product licenses. In this alternate arrangement, some employees may not be able to use the software product when needed or desired, thereby reducing the work output of the customer.

Finally, the customer's hardware needs may change rapidly. Acquisition or disposal of hardware may affect the number of software licenses the customer needs to have in place. By having to separately purchase additional licenses of the software product, the customer may experience delays before the newly acquired hardware is fully functional. Therefore, pay-per-use (PPU) licensing of software applications is getting enormous popularity.

### SUMMARY

This summary is provided to introduce concepts related to systems and methods for administering PPU licensing of software applications and the concepts are further described below in the detailed description. This summary is not intended to identify essential features of the claimed subject matter nor is it intended for use in determining or limiting the scope of the claimed subject matter.

In one implementation, a system for administering pay-per-use (PPU) licensing of software applications is disclosed. The system comprises a processor and a memory. The memory comprises an administrative module configured to generate a license file based upon a request sent by a user. The license file is used by the user for accessing a software application. The administrative module is further configured to receive a log file from the user. The log file comprises a track of at least one of a number of usages of the software application and a time period of the software application. In one implementation, the log file is signed using a private key of the user. The memory further includes an assessment module configured to determine a validity of the license file based upon the log file.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network implementation of a pay-per-use (PPU) licensing system and a plurality of PPU client devices, in accordance with an embodiment of the present subject matter.

Figure 2 illustrates a block diagram representation of the PPU licensing system and a PPU client device of the plurality of PPU client devices of Figure 1, in accordance with an embodiment of the present subject matter.

Figure 3 shows a flowchart illustrating a method for administering pay-per-use (PPU) licensing of software applications, in accordance with an embodiment of the present subject matter.

Figure 4 shows a flowchart illustrating a method for administering pay-per-use (PPU) licensing of software applications, in accordance with an embodiment of the present subject matter.

### DETAILED DESCRIPTION

Systems and methods for administering pay-per-use (PPU) software licensing of software applications are described. In a PPU licensing mechanism, users pay as per their usage of the software applications, rendering them to pay a very nominal amount for the usage of software applications as against paying a lump sum as a one time payment. Hence, PPU licensing systems which generate PPU licenses for software applications are getting popular day by day. These PPU licensing systems help in curbing software piracy and other illegal means of using a software application. However, conventional PPU licensing systems neither ensure security of the licenses generated and nor do they administer the entire PPU licensing mechanism efficiently. For example, conventional PPU licensing systems do not facilitate encryption and decryption of licenses. Further, it is difficult to carry-forward unused trials or time period as the relevant data can not be retrieved upon expiry/during subsequent renewal.

In one implementation of the present subject matter, a user may wish to install a software application on a client device belonging to the user. Examples of the software application may include a gaming software, a text editor, or any other software application. The installation of the software application may require a license. In order to obtain the license, the user may send a request for generating a license file to a PPU licensing system. Based upon the request, the PPU licensing system may generate a license file. In one embodiment, the PPU licensing system may employ a technique, such as Public Key Infrastructure (PKI) for generation of the license file. The license file may either be a pre-paid license file or a post-paid license file. The license file (either pre-paid or post-paid) and a private key obtained from the PPU licensing system may be used by the user to install and access the software application on the client device, thereby making accessing of the software application secure. In one implementation, the PPU licensing system also generates reports for the licenses files that are valid or have expired.

In one implementation, when the user installs the software application using the license file, the client device may track a number of usages of the software application and a time period of usage of the software application. For example, the client device may generate and maintain one or more log files to track usages of the software application. The log file may be digitally signed using the private key and may subsequently be uploaded to the PPU licensing system to determine validity of the license file. The PPU licensing system may generate a report on all the log files that are confirmed as valid and the ones that are confirmed as corrupted. In case of a pre-paid license file, determining the validity may include computing a carry forward of left over usages, such as unexhausted time period and unexhausted number of trials of the software application. However, in case of a post-paid license file, determining the validity may include generating an invoice for the usage of the license file a billing cycle. Therefore, the present subject matter allows secure access of the software application along with efficient administration of the entire PPU licensing mechanism.

While aspects of described system and method for administering pay-per-use (PPU) licensing of software applications may be implemented in any number of different computing systems, environments, and/or configurations, the embodiments are described in the context of the following exemplary system.

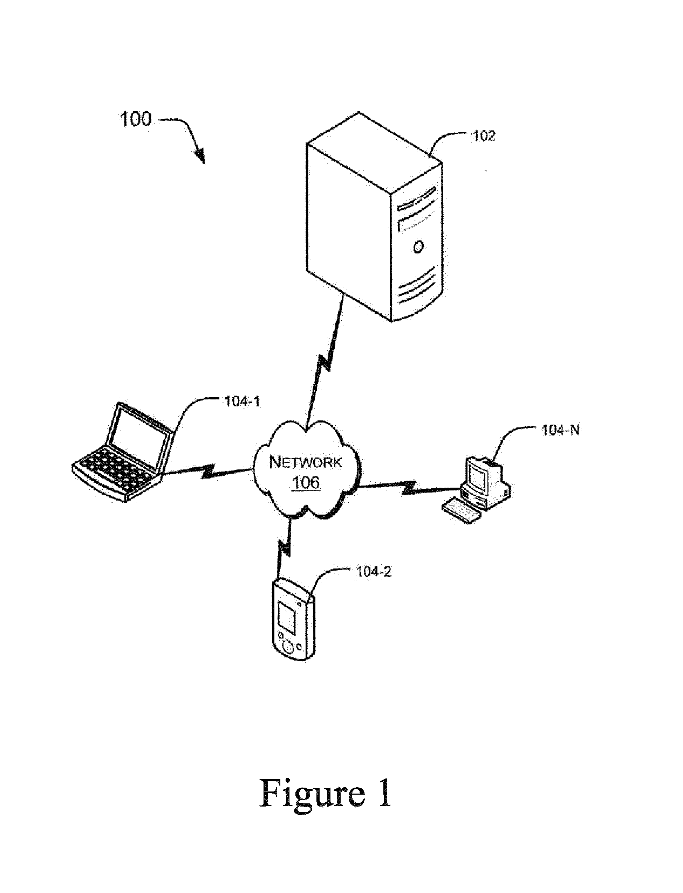

Referring now to Figure 1, a network implementation 100 of a PPU licensing system 102 for administering PPU software licensing for a plurality of PPU client devices 104 is illustrated, in accordance with an embodiment of the present subject matter. In one embodiment, the PPU licensing system 102, hereinafter the system 102 may be used for managing PPU licensing for various software applications installed on the PPU client devices 104. Examples of the software applications may include stand alone software applications, web based software applications, and the like.

Further, the system 102 may be implemented in a variety of computing systems, such as a laptop computer, a desktop computer, a notebook, a workstation, a mainframe computer, a server, a network server, and the like. It will be understood that the system 102 may be communicatively coupled to the PPU client devices 104-1, 104-2,...104-N, referred to as client device(s) 104 hereinafter. The client devices 104 may be implemented in devices, such as a portable computer, a personal digital assistant, a handheld device, and a workstation. The client devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

In one implementation, a user may wish to install a software application on the client devices 104. Examples of the software application may include a gaming software, a text editor, and or any other software application. In order to install the software application in the client device 104, the user may require a license. In order to obtain the license, the user may use the client device 104 to send a request to the system 102 for generating a license file. In one example, the system 102 may host a webpage where user may register and submit the request for generating the license file. It may be understood that the request for generating the license file may be submitted by any device other than the client device. For example, the request may be sent though a smart phone whereas the software application may be installed in the client device, such as a laptop. Based upon the request, the system 102 may provide the user with the options of generating a pre-paid license file or a post-paid license file. Based upon these options, the user may request the system 102 to generate either a pre-paid license file or a post-paid license file. The license file (either pre-paid or post-paid) obtained from the system 102 may be used by the user to install and access the software application on the client device 104. In one example, the license file may include a pass code that may facilitate installation of the software application on the client device. In one implementation, the PPU licensing system also generates reports for the licenses files that are valid or have expired. For example, these reports keep a track of a number of license files being generated and whether those license files are valid/active or have expired. These reports may be stored in a license file database.

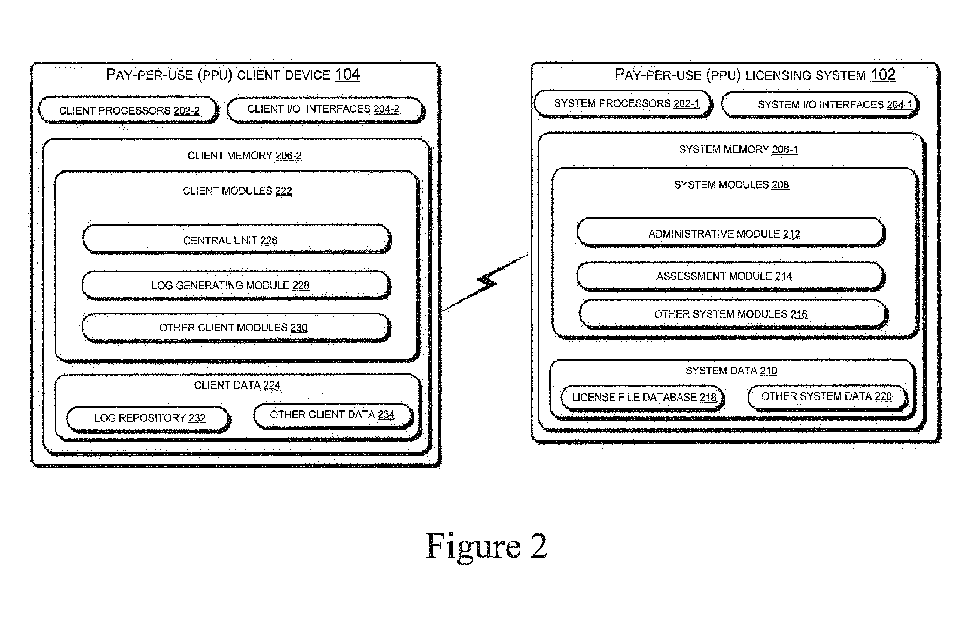

In one implementation, when the user installs the software application using the pre-paid license file, a log generating module (shown in Figure 2) gets installed in the client device 104 from the software application. The log generating module may generate a log file to track a number of usages of the software application and a time period of usage of the software application. The usage of the software application may be represented in form of entries in the log file. All the entries in the log file are signed using the private key of the user. The log file may be uploaded or transmitted to the system 102 by the user, for example, in a periodic manner or while renewing the license file. Based upon the log file, the system 102 may determine a validity of the license file. In the present implementation, determining the validity may include computing a carry forward of unexhausted time period and a number of unexhausted usages of the software application as explained in the explanation of Figure 2.

However, in another embodiment, when the user installs the software application using the post-paid license file, a log generating module (shown in Figure 2) gets installed in the client device 104 from the software application. The log generating module may generate a log file to track a number of usages of the software application in one billing cycle. After every billing cycle, the user may upload or transmit the log file to the system 102. Based upon the log file, the system 102 may determine a validity of the license file. In the present implementation, determining the validity may include computing of an invoice based upon a usage of the software application within the billing cycle. After the user clears or pays the invoice, the post-paid license file may be renewed. In another embodiment, if user does not upload the log file at the end of a billing cycle, then the post-paid license file may get expired and the software application may stop working.

Referring now to Figure 2, a block diagram representation of the system 102 and the client device 104 is shown, in accordance with an embodiment of the present subject matter. The system 102 and the client device 104 as discussed previously may be implemented as various types of computing systems and or communication devices. In one implementation, the system 102 and the client device 104 include a system processor 202-1 and a client processor 202-2, respectively. The system processor 202-1 and the client processor 202-2 may be collectively referred to as the processor 202.

The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in a memory.

Also, the system 102 and the client device 104 include a system I/O interface 204-1 and a client I/O interface 204-2, respectively, which are collectively referred to as I/O interfaces 204. The I/O interface 204 may include a variety of software and hardware interfaces, for example, a web interface, a graphical user interface, and the like. The I/O interface 204 may allow the system 102 to interact with a user directly or through the client device 104. Further, the I/O interface 204 may enable the system 102 to communicate with other computing devices, such as web servers, external data servers and remote monitoring and/or maintenance servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The system 102 and the client device 104 may further include one or more memory components, referred to as a system memory 206-1 and a client memory 206-2, coupled to the system processor 202-1 and the client processor 202-2, respectively. The system memory 206-1 and the client memory 206-2 are collectively referred to memory 206. The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In one embodiment, the system memory 206-1 includes system modules 208 and system data 210. The system modules 208 may include an administrative module 212, an assessment module 214, and other system modules 216. The system modules 208 include routines, programs, objects, components, data structures, etc., which perform particular tasks or implement particular abstract data types. The other system modules 216 may include programs or coded instructions that supplement applications and functions of the system 102.

The system data 210, amongst other things, serves as a repository for storing data processed, received, and generated by one or more of the system modules 208. The system data 210 may include a license file database 218 and other system data 220. The other system data 220 may include data generated as a result of the execution of one or more modules in the other system modules 216.

In one embodiment, the client memory 206-2 includes client modules 222 and client data 224. The client modules 222 may include a central unit 226, a log generating module 228, and other client modules 230. The client modules 222 include routines, programs, objects, components, data structures, etc., which perform particular tasks or implement particular abstract data types. The other client modules 230 may include programs or coded instructions that supplement applications and functions of the client device 104.

The client data 224, amongst other things, serves as a repository for storing data processed, received, and generated by one or more of the client modules 222. The client data 224 may include a log repository 232 and other client data 234. The other client data 234 may include data generated as a result of the execution of one or more modules in the other client modules 230.

In one implementation, a user may install a software application on the client device 104. In one example, the software application may be a stand alone software application and may be purchased in the form of a computer readable media, such as a compact disc (CD) or may be downloaded from the Internet for installation on the client device 104. The stand alone application is locally hosted on the client device and not on the Internet. The software application, such as gaming software, text editor, or any other software application, may require a license before the user may install or access the software application. In order to obtain the license, the user may register into the system 102 by providing information related to the software application along with certain personal details. Subsequent to the registration in the system 102, the user may send a request to the system 102 for generating a license file. It may be understood that the request for generating the license file may be submitted by any device other than the client device as well. For example, the request may be sent though a smart phone whereas the software application may be installed in the client device, such as a laptop. Based upon the request, the system 102 may provide the user with the options of generating a pre-paid license file or a post-paid license file.

In one implementation, based upon the user's request for obtaining the license file, the administrative module 212 may present several pre-paid plans and several post paid plans on the I/O interface of the system 102. The user may choose to pay either upfront, i.e., pre-paid or after every billing cycle, i.e., post-paid for the license file. In one implementation, the administrative module 212 of the system 102 generates the license file. Further, the license file generated by the administrative module 212 is one of the pre-paid license file or the post-paid license file based upon the user's selection. In one embodiment, the administrative module 212 may also generate a public-private key pair using a Public Key Infrastructure (PKI) known in the art. However, in another embodiment, the administrative module 212 may use any other encryption technique known in the art to generate the license file. The license file comprises an information block and a signature block. Further, the license file may be encrypted by the administrative module 212 using methods known in the art. In the present implementation, the license files may be stored in the license file database 218.

As known, each pre-paid plan of the several pre-paid plans may cost a fixed price having a fixed number of usages for a fixed time period. In one example, out of the several pre-paid plans, the user may choose to activate a pre-paid plan X. The pre-paid plan X may require the user to pay a sum of $10 for 50 usages/trials to be used within a time period of 30 days. A pre-paid license file X generated in accordance with the pre-paid plan X may be sent to the client device 104 along with the private key. The client device 104 may store the pre-paid license file X in the central unit 226. In one embodiment, the user may access the pre-paid license file X and feed the pre-paid license file X and the private key into the software application running on the client device 104. As the pre-paid license file X is encrypted, a license checker (not shown) present in the software application may decrypt the pre-paid license file X using the public-private key pair to check the authenticity of the same. Upon successful decryption of the pre-paid license file X by the license checker, the user may access the software application.

In the present implementation, after the user starts using the software application, the log generating module 228, which gets installed in the client device 104 with the installation of the software application, may generate a log file for tracking a number of usages and a time period of the software application. The log file includes the track of a number of exhausted usages, a number of unexhausted usages, exhausted time period, and unexhausted time period associated of the software application. In one example, based upon the usage of the software application, the log file for the pre-paid license file X may suggest that the number of exhausted usages is 15/50, i.e., the user had logged into the software application and used the same 15 times out of a total of 50 trials. Similarly, the log file may suggest that the number of unexhausted usages is 35/50, i.e., 35 trials are remaining out of the 50 trials. Similarly, the log file may suggest that the exhausted time period is 30/30 days, i.e., the time period within which the user had exhausted the 15 trials of the software application is 30 days. Similarly, the log file may suggest that a remaining time period or the unexhausted time period is zero days. In the present implementation, the log files may be stored in the log repository 232.

As the user has exhausted the complete time period of 30 days, the user may wish to renew the pre-paid license file X. It may be understood that the user may renew the pre-paid license file X anytime after the first purchase of the pre-paid license file X. In order to renew the pre-paid license file X, the user may first digitally sign the log file using the private key. Subsequently, the user may upload or send the log file to the administrative module 212 of the system 102 using the client device 104 or any other device. The administrative module 212 may send the log file to the assessment module 214. The assessment module 214 may use the public key to check tampering of the log file. After the log file is established to be un-tampered, the assessment module 214 may determine a validity of the pre-paid license file X based upon the log file. Determining the validity by the assessment module 214 may include computing a carry forward of the unexhausted time period and the number of unexhausted usages of the software application upon renewal of the pre-paid license file X. In the present example, when the user renews the pre-paid license file X for a sum of $10, the user may get 50 + 35, i.e., 85 usages/trials that he may use within a time period of 30 days. Therefore, it may be understood that left over number of usages or time periods may be carry forwarded in case of pre-paid license files.

Similarly, in another implementation, the user may activate a post-paid plan Y to generate a post-paid license file Y. In the present implementation, the user may pay a predetermined security amount to generate the post-paid license file Y. Subsequently, the administrative module 212 may generate the post-paid license file Y along with a public-private key pair. The post-paid license file Y may be encrypted by the administration module. Further, the post-paid license file Y along with the private key may be fed by the user into the software application. As the post-paid license file Y is encrypted, the license checker (not shown) present in the software application may decrypt the post-paid license file Y using the public-private key pair to check the authenticity of the same. Upon successful decryption of the post-paid license file Y by the license checker, the user may access the software application.

After the user starts using the software application, the log generating module 228 of the client device 104 may generate a log file corresponding to the post-paid license file Y. The log file may keep a track of a number of usages of the software application in a billing cycle and may be stored in the log repository 232. The log file, after being digitally signed using the private key, may be uploaded by the user onto the system 102 after the billing cycle. The assessment module 214 may use the public key to check tampering of the log file. After the log file is established to be un-tampered, the assessment module 214 may determine a validity of the post-paid license file Y based upon the log file. Determining the validity of the license file may include generating an invoice for the billing cycle of the post-paid license file Y. The post-paid license file Y may get renewed after the user pays the invoice.

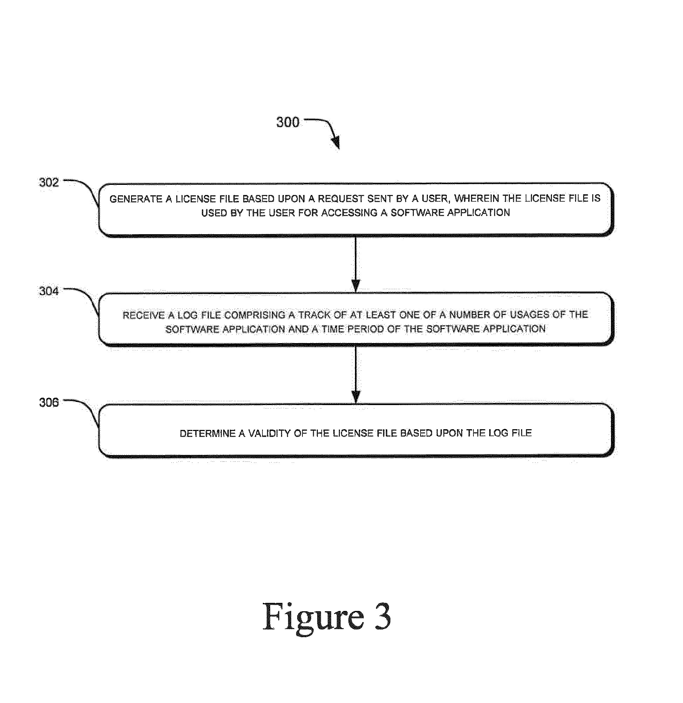

Referring now to Figure 3, a method 300 for administering pay-per-use (PPU) licensing of software applications is shown, in accordance with an embodiment of the present subject matter. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method can be implemented in any suitable hardware, software, firmware, or combination thereof. However, for ease of explanation, in the embodiments described below, the method 300 may be considered to be implemented in the above described system 102.

At block 302, a license file may be generated based upon a request sent by a user. The license file may be used to install and access a software application on the client device 104. In one example, the license file may be generated by the administrative module 212.

At block 304, a log file comprising a track of at least one of a number of usages of the software application and a time period of the software application may be received from the client device 104. In one example, the log file may be received by the administrative module 212.

At block 306, a validity of the license file may be determined based upon the log file. In case of a pre-paid license file, determining the validity may include computing a carry forward of left over usages and time period. However, in case of a post-paid license file, determining the validity may include computing an invoice for the usage of the software application in a billing cycle. In one example, the validity may be determined by the assessment module 214.

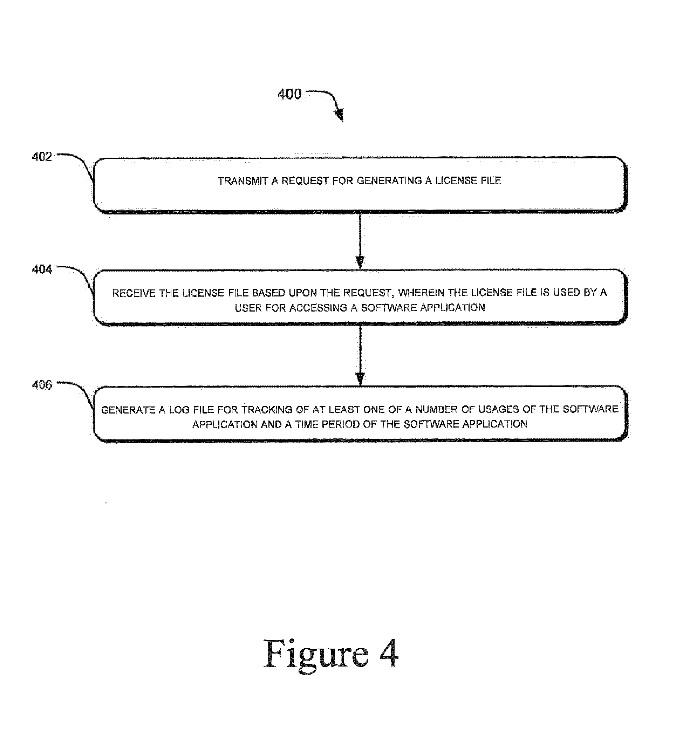

Referring now to Figure 4, a method 400 for administering pay-per-use (PPU) licensing of software applications is shown, in accordance with an embodiment of the present subject matter. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the spirit and scope of the subject matter described herein. Furthermore, the method can be implemented in any suitable hardware, software, firmware, or combination thereof. However, for ease of explanation, in the embodiments described below, the method 400 may be considered to be implemented in the above described client device 104.

At block 402, a request for generating a license file may be transmitted. In one example, the request may be transmitted to the system 102 by the central unit 226.

At block 404, the license file may be received based upon the request. The license file may be used by a user for accessing a software application. In one example, the license file may be sent by the system 102 and received by the central unit 226.

At block 406, a log file for tracking of at least one of a number of usages of the software application and a time period of the software application may be generated. In one example, the log file may be generated by the log generating module 228. Further, the based upon the log file, the PPU licensing of software applications may be managed.

Although implementations for methods and systems for administering pay-per-use (PPU) licensing of software applications have been described in language specific to structural features and/or methods, it is to be understood that the appended claims are not necessarily limited to the specific features or methods described. Rather, the specific features and methods are disclosed as examples of implementations for administering PPU licensing of software applications.

## Claims

1. A pay-per-use (PPU) licensing system (102) comprising:
a processor (202-1); and
a memory (206-1) coupled to the processor (202-1), the memory (206-1) comprising:
an administrative module (212) configured to
generate a license file based upon a request sent by a user, wherein the license file is used by the user for accessing a software application; and
receive a log file from the user, wherein the log file comprises a track of at least one of a number of usages of the software application and a time period of the software application; and
an assessment module (214) configured to
determine a validity of the license file based upon the log file.

2. The PPU licensing system (102) of claim 1, wherein the log file comprises the track of at least one of a number of exhausted usages, a number of unexhausted usages, exhausted time period, and unexhausted time period associated with a pre-paid license file of the software application, and wherein determining the validity comprises computing a carry forward of the unexhausted time period and the number of unexhausted usages upon renewal of the pre-paid license file.

3. The PPU licensing system (102) of claim 1, wherein determining the validity comprises generating an invoice for a post-paid license file of the software application based upon the log file.

4. The PPU licensing system (102) of claim 1, wherein the software application is a stand alone software application.

5. A pay-per-use (PPU) client device (104) comprising:
a processor (202-2); and
a memory (206-2) coupled to the processor (202-2), the memory (206-2) comprising
a central unit (226) configured to
transmit a request for generating a license file to a PPU licensing system (102);
receive the license file from the PPU licensing system (102) based upon the request, wherein the license file is used for accessing a software application installed on the PPU client device (104); and
a log generating module (228) configured to generate a log file for tracking of at least one of a number of usages of the software application and a time period of the software application.

6. The PPU client device (104) of claim 5, wherein the log file comprises the track of at least one of a number of exhausted usages, a number of unexhausted usages, exhausted time period, and unexhausted time period associated with a pre-paid license file of the software application, and wherein the pre-paid license file is renewed with a carry forward of the unexhausted time period and the number of unexhausted usages.

7. The PPU client device (104) of claim 5, wherein the central unit is further configured to receive an invoice for a post-paid license file of the software application based upon the log file.

8. The PPU client device (104) of claim 5, wherein the software application is a stand alone software application.

9. A method for administering pay-per-use (PPU) licensing of a software application, the method comprising:
generating a license file based upon a request sent by a user, wherein the license file is used for accessing the software application on a PPU client device;
receiving a log file from the user, wherein the log file comprises a track of at least one of a number of usages of the software application and a time period of the software application; and
determining a validity of the license file based upon the log file.

10. The method of claim 9, wherein the log file comprises the track of at least one of a number of exhausted usages, a number of unexhausted usages, exhausted time period, and unexhausted time period associated with a pre-paid license file of the software application, and wherein determining the validity comprises computing a carry forward of the unexhausted time period and the number of unexhausted usages upon renewal of the pre-paid license file.

11. The method of claim 9, wherein determining the validity comprises generating an invoice for a post-paid license file of the software application based upon the log file.

12. A method for administering pay-per-use (PPU) licensing of a software application, the method comprising:
transmitting a request for generating a license file;
receiving the license file based upon the request, wherein the license file is used for accessing a software application on a PPU client device; and
generating a log file for tracking of at least one of a number of usages of the software application and a time period of the software application.

13. The method of claim 12, wherein the log file comprises the track of at least one of a number of exhausted usages, a number of unexhausted usages, exhausted time period, and unexhausted time period associated with a pre-paid license file of the software application, and wherein the pre-paid license file is renewed with a carry forward of the unexhausted time period and the number of unexhausted usages.

14. The method of claim 12, further comprising receiving an invoice for a post-paid license file of the software application based upon the log file.

15. A computer-readable medium having embodied thereon a computer program for executing a method for administering pay-per-use (PPU) licensing of a software application, the method comprising:
generating a license file based upon a request sent by a user, wherein the license file is used for accessing the software application on a PPU client device;
receiving a log file from the user, wherein the log file comprises a track of at least one of a number of usages of the software application and a time period of the software application; and
determining a validity of the license file based upon the log file.
